# DEMANDE DE BREVET EUROPEEN

(11) **EP 0 816 700 A1**
(43) Date de publication de la demande: **07.01.1998**
(21) Numéro de dépôt: 97401528.1
(22) Date de dépôt: 01.07.1997
(51) Int. Cl.: F16C 39/06

(54) **Palier magnétique pour le centrage actif selon au moins un axe d'un corps mobile par rapport à un autre**

(30) Priorité: 05.07.1996 FR 9608414
(71) Demandeur: AEROSPATIALE Société Nationale Industrielle, 75781 Paris Cédex 16 (FR)
(72) Inventeur: Lambert, Charles, 06150 Cannes La Bocca (FR)
(74) Mandataire: Rinuy, Santarelli

(57) **Abrégé**

Un palier magnétique pour le centrage actif selon au moins un axe de centrage d'un second corps mobile par rapport à un premier corps comporte :
- une première portion (11) comportant deux plaques ferromagnétiques parallèles (14), un premier noyau (15) entouré d'un premier bobinage (16) et des moyens (18) à aimantation permanente perpendiculaire auxdites plaques ferromagnétiques,
- une seconde portion (12) séparée des plaques ferromagnétiques de la première portion par une paire d'entrefers (19, 20) d'épaisseur variable parallèlement à l'axe de centrage.

Les moyens à aimantation permanente sont décalés par rapport au noyau selon une direction sensiblement parallèle à la paire d'entrefers, et les plaques ferromagnétiques sont munies d'encoches (22, 22' ...) disposées en regard des moyens à aimantation permanente et orientées transversalement à la paire d'entrefers.

## Description

L'invention concerne un palier magnétique pour le centrage actif selon au moins un axe d'un second corps mobile par rapport à un premier corps. Il peut s'agir d'un corps mobile en rotation par rapport à un stator; il peut également s'agir d'un corps mobile en translation par rapport à un corps fixe.

Ainsi qu'on le sait, un palier magnétique pour le centrage actif selon au moins un axe de centrage d'un corps mobile par rapport à un autre corps comporte, selon diverses solutions connues, de première et seconde portions destinées à être fixées à l'un ou à l'autre des corps, en étant séparées par une paire d'entrefers d'épaisseur variable parallèlement à l'axe de centrage. Ces entrefers s'étendent le long d'une ligne de mouvement relatif entre les portions, cette ligne de mouvement relatif étant parallèle aux plaques ferromagnétiques. Dans le cas d'un rotor mobile par rapport à un stator, cette ligne de mouvement est typiquement annulaire ; par contre, dans le cas d'un corps mobile en translation par rapport à un deuxième corps, cette ligne de mouvement relatif est sensiblement linéaire. La première portion (il s'agit le plus souvent de la portion qui est fixée à celui des deux corps qui est fixe, ce qui explique que l'on parle habituellement de portion statorique) comporte deux plaques ferromagnétiques parallèles entre lesquelles sont disposés, d'une part, un noyau entouré d'un bobinage, et, d'autre part, des moyens à aimantation permanente, de sens d'aimantation perpendiculaire auxdites plaques. La seconde portion, typiquement portée par le corps mobile, est en matériau ferromagnétique et sert à assurer la fermeture des flux générés dans la paire d'entrefers par le bobinage d'une part et par les moyens à aimantation permanente d'autre part.

De manière tout à fait classique, les flux magnétiques générés par le bobinage d'une part et par les moyens à aimantation permanente d'autre part, circulent dans des boucles magnétiques sensiblement coplanaires, situées dans un plan sensiblement perpendiculaire aux plaques ferromagnétiques et à la ligne de mouvement relatif grâce à quoi les flux se combinent simplement par addition ou soustration. C'est pourquoi les moyens à aimantation permanente sont typiquement disposés entre le noyau et son bobinage d'une part, et la paire d'entrefers d'autre part.

Une telle conception de palier a, jusqu'à présent, répondu de manière tout à fait satisfaisante à de nombreux besoins. Elle présente toutefois l'inconvénient de conduire à un encombrement notable transversalement aux entrefers ; cela constitue un handicap pour l'obtention de palier magnétique de très petite taille. En outre, les moyens à aimantation permanente sont généralement constitués par un barreau aimanté s'étendant parallèlement à la ligne de mouvement relatif, c'est-à-dire à la paire d'entrefers. Ce barreau aimanté est alors annulaire dans le cas d'un rotor mobile par rapport à un stator; en variante, ce barreau est linéaire dans le cas d'un corps mobile en translation par rapport à un corps fixe. Dans le cas notamment du centrage d'un rotor par rapport à un stator, la conception d'un palier du type précité exige donc la réalisation d'un anneau aimanté ayant des dimensions (notamment diamètre) bien précises, ce qui impose, pour éviter d'avoir un stock considérable d'aimants, de réaliser les barreaux aimantés annulaires au cas par cas selon les besoins, ce qui prolonge d'autant les délais de fabrication des paliers magnétiques pour rotor/stator, et conduit à des coûts importants.

En ce qui concerne le premier inconvénient, à propos de l'encombrement transversalement aux entrefers, il a déjà été proposé de donner au noyau, et donc au bobinage, une forme en haricot longeant les barreaux aimantés. Cela permet une certaine minimisation de l'encombrement radial des paliers pour rotor. Il est à noter toutefois que l'efficacité de tel bobinage n'est pas optimale puisque la section du noyau dans lequel le bobinage génère un flux se trouve nécessairement réduite, à moins d'admettre une très grande longueur de bobinage, avec un nombre important de spires autour de ce noyau.

Un autre inconvénient peut être trouvé dans le fait que les barreaux aimantés sont généralement réalisés par frittage. Or il est bien connu qu'il devient rapidement difficile d'obtenir de bonnes pièces frittées denses, pour un coût modéré, lorsque l'on augmente la taille et le volume des pièces en question. Il y a donc une limitation actuelle dans la taille des paliers pour rotor que l'on peut réaliser pour un coût acceptable.

L'invention a pour objet de pallier les inconvénients précités. Elle vise ainsi à permettre de réaliser des aimants, sans avoir à connaître au préalable les dimensions, voire la conception, du palier auquel ils sont destinés. Elle vise également à permettre la réalisation de gros paliers, même de taille supérieure à ceux que l'on sait actuellement réaliser. Elle vise à permettre, à l'inverse, la réalisation de paliers de très petite taille, notamment en ce qui concerne l'encombrement transversal aux entrefers. Elle vise enfin à permettre également une meilleure efficacité des bobinages, c'est-à-dire un meilleur rapport entre la section de chaque spire et la longueur de celle-ci (cela correspond pour le noyau à un rapport le plus important possible entre sa section et son périmètre).

L'invention propose à cet effet un palier magnétique pour le centrage actif selon au moins un axe de centrage d'un second corps mobile par rapport à un premier corps, comportant :
- une première portion destinée à être fixée à l'un des premier et second corps, comportant deux plaques ferromagnétiques parallèles, un premier noyau entouré d'un premier bobinage et des moyens à aimantation permanente perpendiculaire auxdites plaques ferromagnétiques, ce premier moyen et ces moyens à aimantation permanente étant montés entre ces plaques ferromagnétiques,
- une seconde portion destinée à être fixée à l'autre des premier et second corps, en étant séparée des plaques ferromagnétiques de la première portion par une paire d'entrefers d'épaisseur variable parallèlement à l'axe de centrage, ces entrefers s'étendant le long d'une ligne de mouvement relatif parallèle aux plaques ferromagnétiques,
caractérisé en ce que les moyens à aimantation permanente sont décalés par rapport au noyau selon une direction sensiblement parallèle à la paire d'entrefers, et les plaques ferromagnétiques sont munies d'encoches disposées en regard de chacun des moyens à aimantation permanente et orientées transversalement à la paire d'entrefers.

On appréciera que, puisque les moyens à aimantation permanente d'une part, et les noyaux entourés de leur bobinage, d'autre part, sont désormais décalés parallèlement (et non plus perpendiculairement) à la ligne de mouvement relatif le long de laquelle s'étend la paire d'entrefers, on obtient une minimisation de l'encombrement transversalement à cette paire d'entrefers. On appréciera que cette disposition, rompt complètement avec la conception habituelle des paliers puisque l'invention propose que les lignes de flux généré par les moyens à aimantation permanente, d'une part, et par le bobinage, d'autre part, puissent franchir les entrefers en des endroits éventuellement différents. Les boucles magnétiques formées par ces lignes de flux ne sont donc plus, même approximativement, coplanaires dans un plan perpendiculaire aux plaques ferromagnétiques et sensiblement parallèles à l'axe de centrage. La présence d'encoches en regard de chacun des moyens à aimantation permanente (en pratique des aimants) permet toutefois de délimiter dans les plaques ferromagnétiques des zones délimitant dans ces dernières l'espace disponible pour la répartition des lignes de flux, pour un axe de centrage donné. Le fait que les moyens à aimantation permanente soient décalés par rapport au noyau le long des entrefers a aussi pour corollaire que ces moyens peuvent être constitués par des aimants de taille ou de forme indépendante de la taille du palier final.

De manière préférée, les moyens à aimantation permanente comportent deux aimants permanents disposés de part et d'autre du noyau parallèlement à la paire d'entrefers. Cela établit une symétrie des lignes de flux de part et d'autre du noyau (lorsqu'on longe la paire d'entrefers) tant que le bobinage n'est pas alimenté.

De manière également préférée, le palier comporte au moins un second noyau entouré d'un second bobinage, et de seconds moyens à aimantation permanente décalés parallèlement à la paire d'entrefers par rapport audit second noyau ; ce second noyau est monté entre lesdites plaques ferromagnétiques en étant décalé, par rapport au premier noyau, parallèlement à la paire d'entrefers, et est séparé de ce premier noyau par un aimant permanent faisant partie à la fois des premiers et des seconds moyens à aimantation permanente. Ce second noyau, entouré par un second bobinage, détermine en pratique un second axe de centrage, et l'aimant permanent situé entre les deux bobinages peut contribuer au centrage selon chacun de ses deux axes, en partageant ses lignes de flux de part et d'autre des encoches..

De manière encore préférée, le palier comporte avantageusement une alternance d'aimants permanents et de noyaux longeant la paire d'entrefers. Il peut ainsi y avoir plusieurs axes de centrage.

Selon un autre enseignement préféré de l'invention, les aimants sont contigus au(x) noyau(x). Cela permet une occupation optimale du volume situé entre les plaques ferromagnétiques et longeant la paire d'entrefers.

Pour augmenter encore le taux d'occupation de ce volume situé entre les plaques ferromagnétiques, on peut donner aux aimants et aux noyaux des sections polygonales avec des côtés soit sensiblement parallèles soit sensiblement transversaux à la paire d'entrefers.

Un tel palier peut servir au centrage d'un rotor par rapport à un stator. La paire d'entrefers séparant les première et seconde portions est alors annulaire. De manière préférée, ce palier comporte quatre noyaux entourés de quatre bobinages, alternant avec quatre aimants permanents. On définit ainsi deux axes de centrage disposés à 90° l'un par rapport à l'autre, chaque axe de centrage étant déterminé par la combinaison de deux bobinages diamétralement opposés.

En variante, le palier peut servir au centrage d'un corps mobile en translation par rapport à un corps fixe. C'est en particulier dans cette configuration que la forme et la dimension des aimants peuvent être choisies indépendamment de la dimension du palier, notamment de sa longueur.

L'axe de centrage est, selon une caractéristique connue en soi, avantageusement parallèle aux plaques ferromagnétiques. Il doit cependant être bien compris qu'en variante cet axe de centrage peut être perpendiculaire à ces plaques, par exemple pour un centrage axial actif d'un rotor par rapport à un stator.

Des objets, caractéristiques et avantages de l'invention ressortiront de la description qui suit donnée en regard des dessins annexés sur lesquels :
- la figure 1 est une vue de dessus d'un palier de centrage d'un rotor par rapport à un stator, conforme à l'invention,
- la figure 2 est une vue de dessus du palier de la figure 1, après enlèvement de la plaque ferromagnétique couvrant les aimants et les noyaux,
- la figure 3 est une vue en coupe axiale du palier de la figure 1, selon la ligne de coupe III-III de cette figure 1,
- la figure 4 est une vue en coupe axiale d'un second mode de réalisation d'un palier conforme à l'invention,
- la figure 5 est une vue de dessus, avec enlèvement d'une plaque ferromagnétique, du palier de la figure 4,
- la figure 6 est une vue en coupe transversale d'un palier conforme à l'invention, servant au centrage d'un corps mobile en translation par rapport à un corps fixe,
- la figure 7 est une vue de dessus du palier de la figure 6, après enlèvement d'une plaque ferromagnétique de ce palier,
- la figure 8 est un diagramme représentant de manière approchée les lignes de flux généré par un aimant dans la paire d'entrefers d'un palier conforme à l'invention,
- la figure 9 est un diagramme représentant de manière approchée les lignes de flux généré par l'aimant, d'une part, et des bobinages entourant des noyaux, d'autre part, traversant la paire d'entrefers d'un palier conforme à l'invention, en l'absence d'encoches dans les plaques ferromagnétiques, et
- la figure 10 est un diagramme similaire à celui de la figure 9, dans le cas toutefois où des encoches sont, conformément à la figure 1, ménagées dans les plaques ferromagnétiques en regard des aimants.

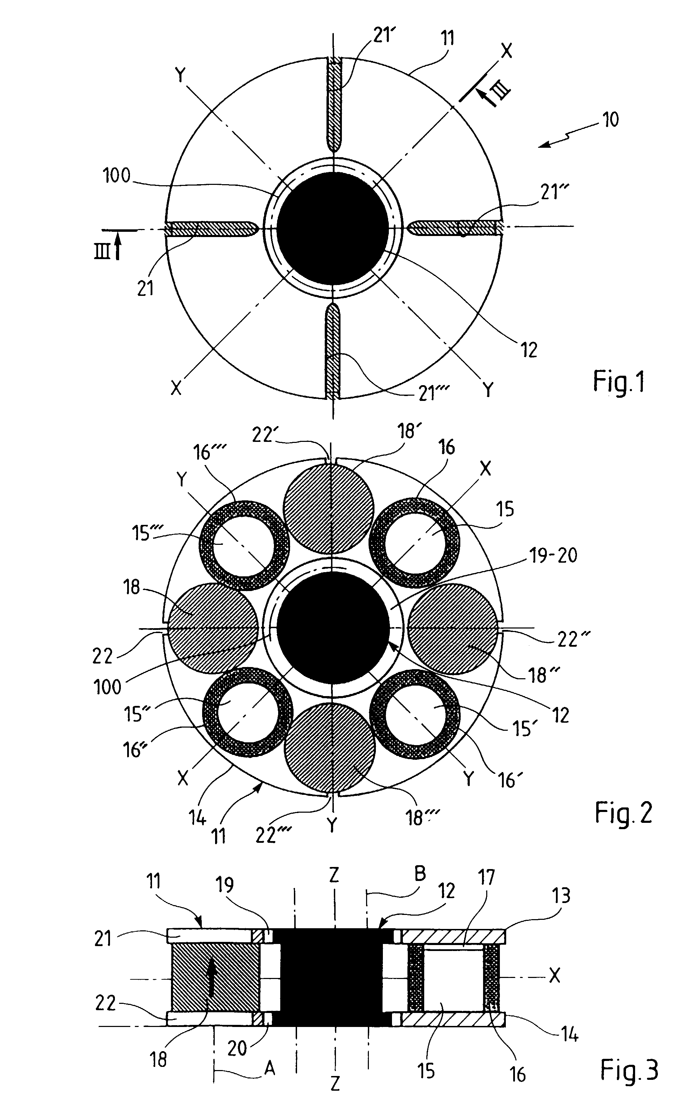

Le palier représenté aux figures 1 à 3 est adapté au centrage radial d'un corps mobile B tournant autour d'un axe de rotation Z-Z par rapport à un corps fixe A.

De manière connue en soi, ce palier, désigné sous la référence générale 10, comporte une première portion 11 destinée à être fixée à l'un des corps schématisé sous la référence A, et une seconde portion destinée à être fixée à l'autre corps, désigné sous la référence B, voir figure 3.

La première portion comporte deux plaques ferromagnétiques 13 et 14 disposées perpendiculairement à l'axe de rotation Z-Z. On voit sur la moitié droite de la figure 3 que le palier comporte, entre les deux plaques ferromagnétiques 13 et 14, un premier noyau 15 entouré d'un premier bobinage 16, disposé selon l'un des axes de centrage, à savoir l'axe X-X. De manière connue en soi, entre le noyau 15 et l'une des plaques ferromagnétiques est disposée une pièce 17 en matériau amagnétique, constituant une cale statique.

On observe sur la moitié gauche de la figure 3 que le palier 10 comporte également, entre les deux plaques ferromagnétiques 13 et 14 des moyens à aimantation permanente 18, dont le sens d'aimantation est parallèle à l'axe de rotation Z-Z.

Les plaques ferromagnétiques 13 et 14 sont séparées de la seconde portion ferromagnétique 12 par une paire d'entrefers 19 et 20 s'étendant le long d'une ligne de mouvement relatif, schématisée sous la référence 100 (voir figure 1), ici une ligne circulaire.

On observe à la figure 2 que le palier 10 comporte deux noyaux entourés de deux bobinages pour chacun des axes X-X et Y-Y de centrage. Plus précisément le palier 10 comporte quatre noyaux repérés 15, 15', 15" et 15"', entourés de bobinage désigné 16, 16', 16" et 16"'.

Selon une caractéristique essentielle de l'invention, les moyens à aimantation permanente disposés entre les plaques ferromagnétiques 13 et 14 sont décalés par rapport au noyau entouré des bobinages, parallèlement à la paire d'entrefers. Il y a plus précisément une alternance de noyaux et d'aimants, chaque aimant 18, 18', 18", 18"' étant disposé entre deux noyaux, et réciproquement. Par ailleurs, chaque plaque ferromagnétique 13 ou 14 est munie, en regard axialement (c'est-à-dire parallèlement à l'axe de rotation Z-Z) de chacun des aimants 18 à 18"', d'encoches 21, 21', 21", 21"', et 22, 22', 22" et 22"'.

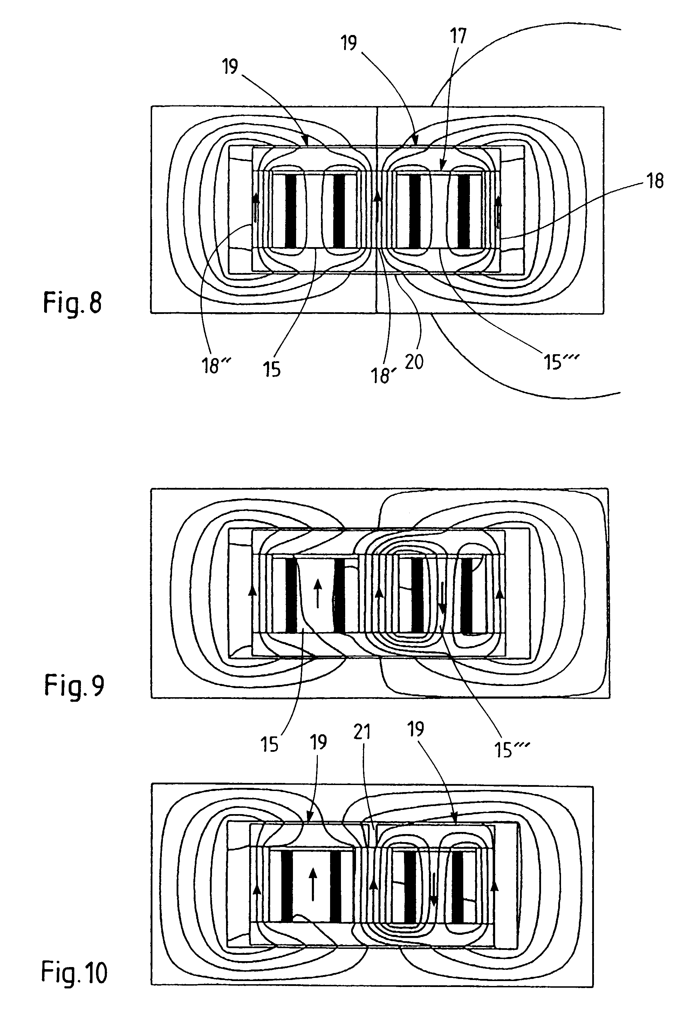

Ainsi que cela ressortira de la description des figures 8 à 10, chaque noyau, entouré de son bobinage, coopère avec les deux aimants qu'il encadre, et avec les encoches situées en regard de ces aimants, pour contribuer au centrage selon l'axe radial passant par ce noyau.

Il y a donc, selon l'invention, un décalage circonférentiel entre l'ensemble noyau plus bobinage, et les moyens à aimantation permanente qui coopèrent en vue du centrage selon un axe.

Dans la mesure où il y a un seul aimant entre deux noyaux successifs, chacun des aimants contribue, en partageant ces lignes de flux de part et d'autre des encoches qui lui sont associées, à l'action de centrage de chacun desdits noyaux.

Le palier 10 des figures 1 à 3 comporte, de part et d'autre de l'axe de rotation, deux noyaux entourés d'une bobine coopérant avec des aimants. Il est important de noter que, dans une version particulièrement simplifiée, il pourrait n'être prévu qu'un seul noyau.

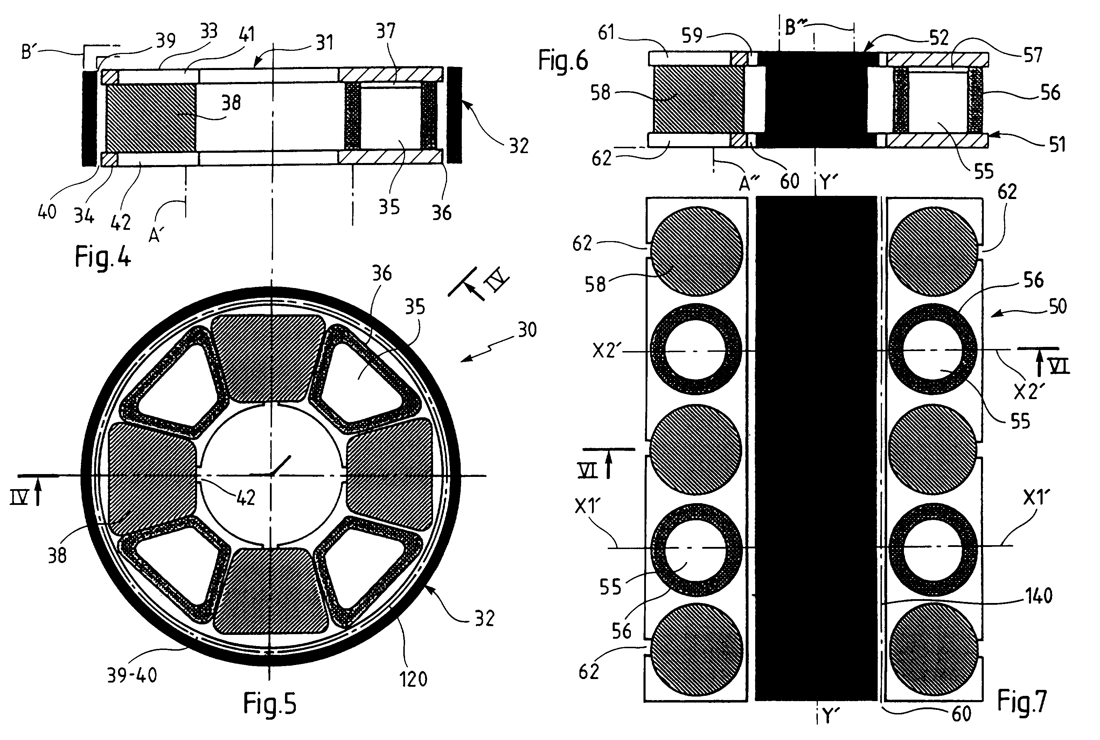

Les figures 4 à 7 visualisent des variantes de réalisation du palier 10 de l'invention.

Les figures 4 et 5 représentent un palier magnétique, désigné sous la référence 30, qui se distingue du palier 10, d'une part par la position relative entre les portions auxquelles sont fixés les corps en mouvement relatif, et par la forme des noyaux d'une part et des aimants d'autre part.

Il faut préciser ici que les éléments du palier 20 qui ont des homologues dans le palier de la figure 10 sont désignés par des numéros de référence qui se déduisent des numéros de ces éléments homologues par addition du nombre 20.

C'est ainsi que le palier 20 comporte, solidaire d'un premier corps noté A', une première portion 31 comportant deux plaques ferromagnétiques 33 et 34, entre lesquelles sont disposés, d'une part des noyaux 35 entourés par des bobinage 36, et d'autre part des aimants permanents 38.

Ces plaques ferromagnétiques 33 et 34 sont séparées d'une seconde portion 32 solidaire du corps B' à centrer, par des entrefers 39 et 40.

Toutefois, à la différence du palier 10 des figures 1 à 3, la pièce 32 du palier 20 des figures 4 et 5, se trouve radialement à l'extérieur de la première portion 31.

Le choix entre les configurations des paliers 10 et 20 dépend bien sûr des besoins.

On observe en outre à la figure 5 qu'aussi bien les aimants 38 que les noyaux 35 ont des sections polygonales, avec des côtés qui sont soit sensiblement parallèles aux entrefers, soit sensiblement transversaux à ceux-ci. Plus précisément, ces aimants et ces noyaux ont des formes trapézoïdales, les côtés adjacents d'un noyau et d'un aimant voisin étant sensiblement parallèles. Il en découle un taux d'occupation optimum de l'espace situé entre les plaques ferromagnétiques 33 et 34.

Les figures 6 et 7 représentent un troisième exemple de réalisation de l'invention, à savoir un palier magnétique, désigné sous la référence générale 50, servant à centrer, par rapport à un corps fixe noté A", un corps mobile noté B", susceptible de se déplacer en translation selon une direction Y'-Y'.

Les éléments de ce palier 50 qui ont des homologues dans le palier 10 des figures 1 à " sont désignés par des numéros qui se déduisent des numéros de ces éléments homologues par addition du nombre 40.

C'est ainsi que, en référence à la figure 6, le palier 50 comporte une première portion 51, comportant deux plaques ferromagnétiques 53 et 54, entre lesquelles sont disposés des noyaux 55 entourés par des bobinages 56, et d'autre part des aimants 58. Ce palier comporte en outre une portion ferromagnétique 52, solidaire du corps B" à centrer, qui est séparée des plaques ferromagnétiques 53 et 54 par des entrefers 59 et 60.

Il est à noter que, puisque le mouvement relatif est un mouvement de translation, selon une ligne linéaire de mouvement relatif (voir la ligne en trait mixte repérée sous la référence 140 à la figure 7), les plaques ferromagnétiques 53 et 54 sont en fait dédoublées de part et d'autre de la portion 52 à laquelle est fixé le corps B" que l'on veut centrer.

Chaque noyau 55, entouré par un bobinage 56, détermine avec les deux aimants 58 qu'il encadre, un axe de centrage. De manière préférée, il y a, pour un axe de centrage donné, deux noyaux entourés de bobinage disposés de part et d'autre de la portion 52. A la figure 7, l'existence de deux paires de noyaux 55 déterminent deux axes de centrage X1'-X1' et X2'-X2'. Dans la mesure où le mouvement relatif est un mouvement linéaire, ces deux axes de centrage sont parallèles.

On peut noter que les aimants d'une part, et les noyaux entourés des bobinages d'autre part des paliers 10 et 50 sont identiques. Ces aimants et ces noyaux peuvent en conséquence être réalisés puis stockés, sans avoir à connaître leur destination finale.

En variante, bien entendu, les aimants et les noyaux du palier 10 peuvent être conformés selon les noyaux et les aimants du palier 30. De même, les aimants et les noyaux du palier 50 peuvent être conformés en polygone, en principe rectangulaire, en sorte d'avoir des côtés qui sont soit parallèles, soit transversaux aux entrefers 59 et 60.

Les figures 8 à 10 représentent, selon une représentation visant à approximer la réalité, les lignes de flux qui apparaissent dans différentes configurations, dans la paire d'entrefers séparant les deux portions d'un palier magnétique conforme à l'invention.

Pour pouvoir représenter dans un plan le trajet des lignes de flux généré par les aimants d'une part et par les bobinages d'autre part, on a représenté un aimant 18' disposé entre deux noyaux 15 et 15"' entouré des bobinages, ces noyaux étant eux-mêmes encadrés par l'aimant 18' et, à droite par un demi-aimant 18, et à gauche par un demi-aimant 18".

Ces noyaux et aimants sont disposés entre deux barreaux horizontaux sensés représenter les pièces ferromagnétiques 13 et 14. Les entrefers qui sont susceptibles d'être traversés par les lignes de flux générées par les bobinages et les aimants sont disposés respectivement, au-dessus et en-dessous des barreaux horizontaux précités. Un cadre extérieur, entourant ces barreaux et longeant ces entrefers, est sensé visualiser la circulation des lignes de flux dans la pièce ferromagnétique 12.

On appréciera que le diagramme des figures 8 à 10, prenant en considération deux noyaux entourés par un bobinage et encadrés par deux demi-aimants, permet de visualiser l'effet de centrage selon deux axes de centrage voisins.

La figure 8 montre les lignes de flux générées par les seuls aimants, en l'absence de courant de commande appliqué au bobinage entourant les noyaux. On constate un parfait partage des lignes de flux de part et d'autre de l'aimant central 18'. Il est rappelé à ce propos que l'effet de centrage selon chacun des deux axes de centrage dépend du nombre de lignes de flux qui traversent les entrefers supérieur 19, inférieur 20.

Le diagramme de la figure 9 correspond au cas où l'on applique au bobinage un courant de commande propre à générer des lignes de flux ascendantes en ce qui concerne le noyau de gauche et des lignes de flux descendantes en ce qui concerne le noyau de droite.

On constate que les lignes de flux générées par l'aimant central se referment majoritairement au travers du noyau de droite : il y a donc une forte dissymétrie entre les lignes de flux se refermant à droite et les lignes de flux se refermant à gauche. Il faut néanmoins constater que le flux dans les entrefers haut et bas est sensiblement le même à droite et à gauche de cet aimant central 18'.

On constate en conséquence que, bien que le mode d'alimentation des bobinages concernant les deux noyaux droite et gauche soit différent, il n'y a pas de découplage entre le centrage selon l'axe associé au noyau de droite et le centrage associé au noyau de gauche.

En fait, aux figures 8 et 9, les barreaux supérieur et inférieur entre lesquels sont enserrés les noyaux et aimants ne comportent pas d'encoche.

Le diagramme de la figure 10 prévoit par contre, en sa partie supérieure, un barreau horizontal comportant, au-dessus de l'aimant central, un espace destiné à représenter une encoche 21 du palier 10.

En appliquant le même régime d'alimentation des bobines qu'à la figure 9, on observe sur ce diagramme de la figure 10, que les lignes de flux générées par l'aimant central sont de même majoritairement déviées vers la droite. Toutefois, à la différence de ce qui apparaît à la figure 9, les lignes de flux de l'aimant central, qui sont déviées vers la droite par rapport au diagramme de la figure 8, franchissent néanmoins l'entrefer à gauche de l'encoche 21. On constate en conséquence que, malgré que les lignes de flux soient déviées majoritairement vers la droite, il y a plus de lignes de flux qui traversent les entrefers supérieur 19 et inférieur 20 à gauche de l'aimant central qu'à droite. Il en découle qu'il y a un effet de rétrécissement des entrefers à gauche de l'aimant central, avec un effet différent en ce qui concerne les entrefers supérieur et inférieur de droite. Il n'y a donc pas de couplage entre les axes de centrage correspondant aux parties droite et gauche des figures 8 à 10. La présence des encoches 21 garantit donc un bon découplage des axes de centrage X-X et Y-Y du palier 10.

Il est clair que le même effet serait obtenu en disposant, radialement dans l'épaisseur des plaques ferromagnétiques, non pas des encoches, mais des barreaux amagnétiques.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Palier magnétique pour le centrage actif selon au moins un axe de centrage d'un second corps (B, B', B") mobile par rapport à un premier corps (A, A', A"), comportant :
- une première portion (11, 31, 51) destinée à être fixée à l'un des premier et second corps, comportant deux plaques ferromagnétiques parallèles (13, 14 ; 33, 34 ; 53, 54), un premier noyau (15, 35, 55) entouré d'un premier bobinage (16, 36, 56) et des moyens (18, 38, 58) à aimantation permanente perpendiculaire auxdites plaques ferromagnétiques, ce premier moyen et ces moyens à aimantation permanente étant montés entre ces plaques ferromagnétiques,
- une seconde portion (12, 32, 52) destinée à être fixée à l'autre des premier et second corps, en étant séparée des plaques ferromagnétiques de la première portion par une paire d'entrefers (19, 20 ; 39, 40 ; 59, 60) d'épaisseur variable parallèlement à l'axe de centrage, ces entrefers s'étendant le long d'une ligne de mouvement relatif (100, 120, 140) parallèle aux plaques ferromagnétiques,
caractérisé en ce que les moyens à aimantation permanente sont décalés par rapport au noyau selon une direction sensiblement parallèle à la paire d'entrefers, et les plaques ferromagnétiques sont munies d'encoches (20, 21 ; 40, 41 ; 60, 61) disposées en regard des moyens à aimantation permanente et orientées transversalement à la paire d'entrefers.

2. Palier magnétique selon la revendication 1, caractérisé en ce que les moyens à aimantation permanente comportent deux aimants permanents disposés de part et d'autre du noyau parallèlement à la paire d'entrefers.

3. Palier magnétique selon la revendication 1, caractérisé en ce que ce palier comporte au moins un second noyau entouré d'un second bobinage et de seconds moyens à aimantation permanente décalés parallèlement à la paire d'entrefers par rapport audit second noyau, ce second noyau étant monté entre lesdites plaques ferromagnétiques en étant décalé par rapport au premier noyau parallèlement à la paire d'entrefers et séparé de ce premier noyau par un aimant permanent faisant partie à la fois des premiers et seconds moyens à aimantation permanente.

4. Palier magnétique selon la revendication 1, caractérisé en ce que ce palier comporte, parallèlement à la paire d'entrefers, une alternance d'aimants permanents et de noyaux.

5. Palier magnétique selon l'une quelconque des revendications 1 à 4, caractérisé en ce que les premiers moyens à aimantation permanente sont contigus au premier noyau.

6. Palier magnétique selon l'une quelconque des revendications 1 à 5, caractérisé en ce que les premiers moyens à aimantation permanente et le premier noyau ont des sections polygonales avec des côtés sensiblement parallèles à la paire d'entrefers et des côtés sensiblement transversaux à cette paire d'entrefers.

7. Palier magnétique selon l'une quelconque des revendications 1 à 6, caractérisé en ce que la paire d'entrefers séparant les première et seconde portions est annulaire.

8. Palier magnétique selon la revendication 7, caractérisé en ce que ce palier comporte quatre noyaux entourés de quatre bobinages et quatre aimants permanents alternant avec les quatre noyaux.

9. Palier magnétique selon l'une quelconque des revendications 1 à 6, caractérisé en ce que la paire d'entrefers séparant les première et seconde portions est sensiblement rectiligne.

10. Palier magnétique selon l'une quelconque des revendications 1 à 9, caractérisé en ce que la paire d'entrefers a une épaisseur variable parallèlement aux plaques ferromagnétiques.
